# FASCICULE DE BREVET EUROPEEN

(11) **EP 2 297 059 B1**
(45) Date de publication et mention de la délivrance du brevet: **16.05.2012**
(21) Numéro de dépôt: 09772683.0
(22) Date de dépôt: 29.05.2009
(51) Int. Cl.: C04B 2/10, C04B 28/18, F17C 1/00

(54) **PROCEDE DE FABRICATION D'UNE STRUCTURE DE GARNISSAGE AVEC MAITRISE DES PARAMETRES DE LA SYNTHESE HYDROTHERMALE**
VERFAHREN ZUR HERSTELLUNG EINER VERPACKUNGSSTRUKTUR MIT STEUERUNG DER PARAMETER FÜR HYDROTHERMALE SYNTHESE
METHOD FOR PRODUCING A PACKING STRUCTURE WITH CONTROL OVER HYDROTHERMAL SYNTHESIS PARAMETERS

(30) Priorité: 02.07.2008 FR 0854501
(43) Date de publication de la demande: 23.03.2011
(73) Titulaire: L'Air Liquide Société Anonyme pour l'Etude et l'Exploitation des Procédés Georges Claude, 75007 Paris (FR)
(72) Inventeur: DEL-GALLO, Pascal, F-91410 Dourdan (FR); BAUNE, Emmanuel, F-95660 Maffliers (FR); CANTONNET, Jérôme, F-19100 Brive (FR)
(74) Mandataire: Beroud, Amandine
(86) Numéro de dépôt international: PCT/FR2009/051017
(87) Numéro de publication internationale: WO 2010/001000

(56) Documents cités:
- EP-A- 1 886 982
- EP-A- 1 887 275
- US-A- 4 349 463

## Description

La présente invention a pour objet de nouvelles structures de garnissage ainsi que leur procédé de fabrication caractérisé en ce que l'étape de synthèse hydrothermale est contrôlée par ses paramètres opératoires, à savoir la température, le temps de montée à cette température, la pression, le temps de synthèse des garnitures céramiques silico-calcaires et le temps de descente en température.

Il est connu d'utiliser des récipients sous pression contenant des gaz, tels que de l'acétylène, dissous dans un solvant, tel que de l'acétone, dans différentes applications médicales et artisanales, et notamment pour réaliser des opérations de soudage, brasage et chauffage en combinaison avec une bouteille d'oxygène.

Ces récipients sont habituellement garnis de matériaux de remplissage solides, destinés à stabiliser les gaz qu'ils contiennent, lesquels sont thermodynamiquement instables sous l'effet de variations de pression ou de température et donc susceptibles de se décomposer lors de leur stockage, leur transport et/ou leur distribution.

Ces matériaux doivent avoir une porosité suffisante pour faciliter le remplissage et la libération des gaz contenus dans le récipient. Ils doivent également être incombustibles, inertes vis-à-vis de ces gaz et présenter une bonne résistance mécanique. Ces matériaux sont classiquement constitués de masses céramiques silicocalciques poreuses, obtenues par exemple à partir d'un mélange homogène dans l'eau de chaux vive ou de lait de chaux et de silice (notamment sous forme de farine de quartz), comme décrit dans les documents WO-A-93/16011, WO-A-98/29682, EP-A-262031, pour former une pâtée qui est ensuite soumise à une synthèse hydrothermale. Précisément, la pâtée est introduite dans le récipient à garnir, sous vide partiel, lequel est ensuite soumis à un autoclavage en pression et en température, puis à un séchage dans un four pour éliminer complètement l'eau et former une masse solide monolithique de composition CaₓSi_{y}O_{z},w.H₂O_présentant des structures cristallines de type tobermorite et xonotlite, avec une présence éventuelle résiduelle de quartz. Divers additifs peuvent être introduits dans ces mélanges de l'art antérieur pour améliorer la dispersion de la chaux et de la silice et éviter ainsi la formation d'inhomogénéités structurales et les phénomènes de retrait observés lors du durcissement de la masse poreuse. Les matériaux de remplissage obtenus doivent en effet présenter une porosité homogène sans espaces vides, au sein du matériau et entre le matériau et le récipient, dans lesquels des poches de gaz pourraient s'accumuler et entraîner des risques d'explosion.

Le document EP-A-264550 indique en outre qu'une masse poreuse contenant au moins 50%, voire au moins 65%, voire même au moins 75% en poids de phase cristalline (par rapport au poids de silicate de calcium) permet de satisfaire à la double exigence de résistance à la compression et au retrait aux températures de synthèse hydrothermale et de cuisson.

Le document EP-A-1886982 décrit un procédé de fabrication d'une structure de garnissage caractérisé en ce qu'il comprend les étapes successives consistant: à calciner à une température d'au moins 850 deg. C pendant au moins une heure des pavés de calcaire tels qu'au moins 90% en poids ont des dimensions de 1 à 15 mm, ledit calcaire ayant une pureté d'au moins 92% en poids et une porosité ouverte allant de 0 à 25%, pour obtenir des particules de chaux vive, à mélanger lesdites particules, en milieu aqueux, à de la silice et éventuellement à d'autres composés, pour obtenir une pâtée, à soumettre ladite pâtée à une synthèse hydrothermale à une température allant de 170 à 300 deg. C, pour obtenir une masse céramique, et à sécher ladite masse céramique à une température de 300 à 450 deg. C pendant une durée de 40 à 200 heures.

Si les masses poreuses connues sont globalement satisfaisantes sur le plan de leur résistance mécanique, il n'en demeure pas moins que les propriétés de soutirage des gaz piégés dans ces masses poreuses sont à ce jour insuffisantes et/ou totalement aléatoires. Cet aspect aléatoire est lié au manque de maîtrise des phases formées et de la microstructure de la masse poreuse, lié à la non maîtrise/compréhension du procédé et notamment de l'étape de synthèse hydrothermale par contrôle des paramètres opératoires, à savoir la rampe de montée en température, la température de synthèse, la durée du palier et le contrôle de la vitesse de refroidissement.

En effet, selon les conditions d'utilisation des bouteilles (température d'utilisation, débit de travail, quantité de gaz contenu dans la bouteille...), elles ne permettent pas toujours de soutirer le gaz qu'elles renferment en continu, à un débit élevé, pendant toute la durée nécessaire à certaines applications, notamment de soudage, avec un taux de restitution de gaz maximal, correspondant au rapport de la quantité de gaz utilisable sur la quantité de gaz initialement stockée. Or, il serait souhaitable de pouvoir satisfaire à un débit de 2001/h en continu pendant 15 mn et à un débit de pointe de 400 1/h pendant 4 mn, pour un taux de contenance en gaz supérieur ou égal à 50% au démarrage de l'essai (défini comme le rapport de la quantité de gaz présente à cet instant sur la quantité de gaz initialement chargée dans le récipient), le récipient ayant un rapport diamètre/longueur compris entre 0,2 et 0,7, de préférence entre 0,35 et 0,5, pour une capacité en eau minimale de un litre et de préférence comprise entre 3 et 50 litres.

Cette insuffisance est notamment liée à la déperdition thermique associée à l'extraction du gaz hors du solvant qui peut s'avérer très préjudiciable au soutirage du gaz. Cette déperdition thermique n'est pas liée principalement à la conductivité intrinsèque du matériau silico-calcaire (pour mémoire le taux de vide est compris entre 87-92%) mais à la taille des cristaux sous forme d'aiguilles (dimensions) constituant la masse poreuse. En effet plus celles-ci sont de petite taille (i) plus le nombre de points de contacts entre elles est élevé et (ii) plus le D50 de la distribution en taille de pores est faible (le D50 est défini comme étant la répartition moyenne de la distribution poreuse). Ceci défavorise alors le transfert de chaleur par conduction aboutissant à une durée plus ou moins longue « d'indisponibilité de la bouteille ». Cet effet est à corréler avec la distribution poreuse (D50) conséquence directe notamment de la synthèse hydrothermale. Dans le cas d'une bouteille d'acétylène, par exemple, la consommation énergétique est de l'ordre de 600 Joules par gramme d'acétylène extrait du solvant. En pratique, il en résulte un refroidissement important de la bouteille au cours du soutirage, entraînant une plus grande solubilisation de l'acétylène dans le solvant et ainsi une baisse de pression se répercutant sur le débit de soutirage. Le débit finit par s'épuiser lorsque la pression en sortie de bouteille passe en deçà de la pression atmosphérique.

En outre, les variations de température et de pression ne sont pas homogènes au sein du récipient, cc qui peut conduire à l'apparition de contraintes mécaniques susceptibles de dégrader la masse poreuse au cours du temps.

Aux difficultés de soutirage s'ajoutent donc des problèmes de résistance mécanique susceptibles d'avoir des répercussions sur la sécurité.

Partant de là, un problème qui se pose est de fournir une structure de garnissage présentant des propriétés de soutirage satisfaisantes et des propriétés mécaniques permettant de répondre au souci de sécurité, et un procédé permettant la fabrication d'une telle structure.

Une solution de l'invention est une structure de garnissage de récipient comprenant une phase cristalline renfermant de 55 à 97 % en poids de cristallites de xonotlite et de 3 à 45% en poids de cristallites de tobermorite, caractérisée en ce qu'elle comprend moins de 15% en poids d'intermédiaires de formule CaₓSi_{y}O_{z},w.H₂O avec 1< x <16, 1< y < 24, 4< z < 60 et 1 < w < 18, dont moins de 5% en poids de CaCO₃, et moins de 5% en poids de SiO₂ et en ce que ladite structure de garnissage est homogène.

Par « homogène », on entend que différents prélèvements effectués localement en différents points de la structure de garnissage (par exemple axialement, en haut, au centre et en bas, et radialement au centre (coeur de la masse) et proche de la paroi métallique...) donnent lieu à des résultats d'analyse (diffraction X, porosité, distribution en taille des pores) homogènes, c'est-à-dire que chaque donnée quantitative mesurée ne diffère pas de plus de 10% d'une zone à une autre.

Ce caractère « homogène » est important car il conditionne l'homogénéité de la solution solvant-acétylène dans le cas d'une bouteille d'acétylène, et par conséquent l'uniformité des taux de chargement locaux sur l'ensemble du volume du récipient renfermant la structure de garnissage. Si la microstructure n'est pas homogène au sein de la masse, des excès de pression se créent localement dans des zones où le taux de chargement est supérieur au taux de chargement nominal de la bouteille. Par exemple, des simulations ont montré qu'à 35°C, la pression d'une bouteille pouvait être décalée de 22.3 bar à 24 bar en prenant comme hypothèse un taux de chargement de 30% supérieur au taux de chargement nominal pour 1/3 du volume de la masse.

La xonotlite est une silicate de calcium de formule Ca₆Si₆O₁₇(OH)₂, qui présente des unités répétitives constituées de trois tétraèdres. Par ailleurs, la tobermorite est également un silicate de calcium, de formule Ca₅Si₆(0,OH)₁₈.5H₂O, cristallisé sous forme orthorhombique.

Le mécanisme de formation de la xonotlite le plus généralement accepté à partir des précurseurs CaO et SiO₂ dans le rapport molaire CaO/SiO₂ de 1 environ en présence d'eau est le suivant :

CaO / SiO₂ / H₂O → Ca(OH)₂ / SiO₂ / H₂O → Gel C-S-H → tobermorite → xonotlite

L'ensemble des phases intermédiaires représente de préférence de 0 à 10% et plus préférentiellement de 0 à 5% du poids de la phase cristalline présente au final dans la structure de garnissage.

Le carbonate de calcium et la silice représentent chacun de préférence moins de 3% du poids total de ces phases cristallines.

Selon le cas, la structure de garnissage peut présenter l'une des caractéristiques suivantes :
- les cristallites sont sous forme d'aiguilles « plates » enchevêtrées les unes aux autres de largeur comprise entre 1 et 10 µm, de longueur comprise entre 1 et 20µm et d'épaisseur inférieure à 5 µm, préférentiellement à 1 µm,
- elle renferme au moins 70% en poids de phase cristalline ;
- les cristallites sont liées les unes aux autres de façon à ménager entre elles un diamètre de pore D95 supérieur ou égal à 0,4 µm et inférieur à 5 µm et un diamètre moyen de pore D50 supérieur ou égal à 0,4 µm et inférieur à 1,5 µm ;
- ladite structure de garnissage présente une résistance à la compression supérieure à 15kg/cm², soit 1,5 MPa. Sa résistance est préférentiellement supérieure à 20 kg/cm², soit 2 MPa;
- les cristallites sont liés les uns aux autres de façon à ménager entre elles un diamètre de pore D95 (diamètre auquel 95% en volume des pores ont un diamètre inférieur) supérieur ou égal à 0,4 µm et inférieur à 5 µm et un diamètre moyen de pore D50 (diamètre auquel 50% en volume des pores ont un diamètre inférieur) supérieur ou égal à 0,4 µm et inférieur à 1,5 µm. La structure de garnissage a avantageusement une porosité ouverte totale comprise entre 80% et 92%. Ces valeurs peuvent toutes être mesurées par porosimétrie au mercure. Il est à noter que la distribution poreuse est le résultat de la taille des cristallites et de leur empilement et donc en grande partie des conditions de la synthèse hydrothermale .

La résistance mécanique à la compression peut être mesurée par prélèvement d'un cube de 100 x 100 mm² dans la structure de garnissage et application entre deux facesd'une force de compression. La résistance mécanique correspond à la pression (en kg/cm² ou MPa) à partir de laquelle la matière commence à se fissurer.

Le recours à une structure de garnissage selon l'invention permet d'atteindre le débit de soutirage recherché tout en satisfaisant aux exigences requises en matière de sécurité et de résistance mécanique.

Outre la phase cristalline décrite précédemment, la structure de garnissage selon l'invention peut comprendre des fibres choisies parmi les fibres synthétiques à base de carbone, telles que décrites notamment dans le document US-A-3,454,362, des fibres de verre alcalino-résistantes, telles que décrites notamment dans le document US-A-4,349,643, des fibres de cellulose partiellement délignifiées, telles que décrites notamment dans le document EP-A-262031, et leurs mélanges, sans que cette liste ne soit limitative. Ces fibres sont utiles éventuellement en tant que matériaux de renfort, pour améliorer la résistance aux chocs de la structure de garnissage, et permettent également d'éviter les problèmes de fissuration au séchage de la structure. Leur rôle est également de présenter des sites de germination/nucléation sur lesquelles les aiguilles de xonolite vont commencer à croître. Ces fibres peuvent être utilisées telles quelles ou après traitement de leur surface.

La structure de garnissage peut en outre inclure des agents dispersants et/ou des liants, tels que les dérivés de cellulose, en particulier la carboxyméthylcellulose, l'hydroxypropylcellulose ou l'éthylhydroxyéthylcellulose, des polyéthers, tels que le polyéthylène glycol, des argiles synthétiques de type smectite, de la silice amorphe de surface spécifique avantageusement comprise entre 150 et 300 m²/g, et leurs mélanges, sans que cette liste ne soit limitative.

De préférence, la structure de garnissage contient des fibres, en particulier des fibres de carbone et/ou de verre et/ou de cellulose. La quantité de fibres est avantageusement inférieure à 55% en poids, par rapport à l'ensemble des précurseurs solides mis en oeuvre dans le procédé de fabrication de la structure de garnissage. Elle est de préférence comprise entre 1 et 20% en poids.

Dans ce contexte, et pour atteindre la structure poreuse spécifique décrite auparavant, la présente invention a pour objet un procédé de fabrication de la structure de garnissage, caractérisé en ce qu'il comprend les étapes suivantes :
a) une étape de montée en température, sur une durée inférieure à 10h, d'un mélange initial de chaux vive et de silice à une température T1 comprise entre 150 et 300°C,
b) une étape de synthèse hydrothermale effectuée :
   - à partir du mélange de chaux vive et de silice issu de l'étape a),
   - à une température T1 comprise entre 150 et 300°C,
   - à une pression P1 comprise entre 5.10⁵ Pa et 25.10⁵ Pa, et
   - pendant une durée t1 comprise entre 10h et 70h ;
c) une étape de refroidissement, sur une durée comprise entre 1 et 48 h, du mélange issu de l'étape b) de la température T1 à la température ambiante à une vitesse de refroidissement ΔTR1 comprise entre 3 et 200°C / heure.
d) une étape de séchage du mélange issu de l'étape c).

Dans certaines conditions l'étape c) peut se réduire à un refroidissement brutal des masses poreuses se caractérisant par un retrait des bouteilles dès la fin du cycle b) et une trempe dans un bac d'eau froide ou un passage sous jets d'eau durant une durée comprise entre 1 minute et 1 h.

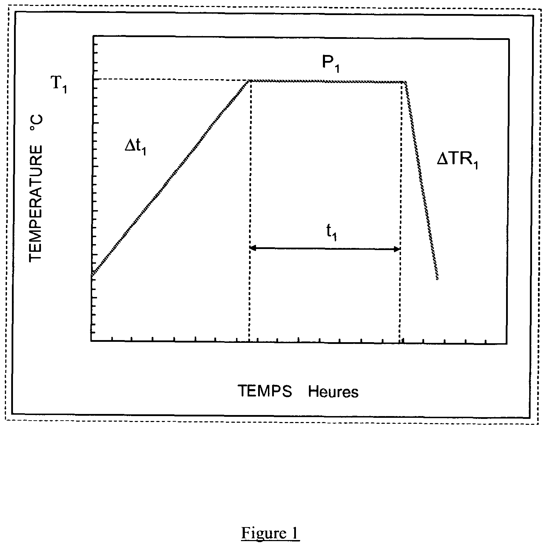

La Figure 1 schématise les conditions opératoires de l'étape de synthèse hydrothermale du procédé de fabrication de la structure de garnissage.

Selon le cas, le procédé de fabrication peut présenter l'une des caractéristiques suivantes :
- à l'étape a) la montée en température s'effectue sur une durée Δt1 inférieure à 2h, à l'étape b) la température T1 est comprise entre 180 et 250°C, et à l'étape c) la pression P1 est comprise entre 7. 10⁵ Pa et 25.10⁵ Pa; La montée en température peut consister en une montée progressive depuis la température ambiante à la température de synthèse hydrothermale T1. Selon une autre forme de l'invention, celle-ci peut consister en une montée progressive depuis la température de remplissage du récipient en pâte, à la température de la synthèse hydrothermale T1;
- la durée de refroidissement est inférieure à 25h;
- le mélange initial représente un volume en eau égal à 6 litres et en ce que l'étape de synthèse hydrothermale est effectuée pendant une durée comprise entre 35 et 45h ;
- la chaux vive est obtenue par calcination à une température d'au moins 850°C pendant au moins une heure de pavés de calcaire tels qu'au moins 90% en poids ont des dimensions de 1 à 15 mm, ledit calcaire ayant une pureté d'au moins 92% en poids et une porosité ouverte allant de 0 à 25% ;
- l'étape de séchage est réalisée à une température de 300 à 450°C pendant une durée de 40 à 200 heures.

Par « pureté », on entend le pourcentage en poids de carbonate de calcium dans le calcaire.

L'homme du métier saura identifier les carrières ou veines exploitées permettant l'obtention des pavés de calcaire précités.

Le mélange initial représente un volume en eau égal au moins à 3 litres et au plus à 50 litres.

En fonction du procédé d'élaboration d'une telle garniture silico-calcaire, notamment en fonction (i) du choix et de la qualité des précurseurs (principalement CaO, et SiO2), (ii) de la température, du temps de montée à cette température, de la pression et de la durée de la synthèse hydrothermale, de la rampe de descente en température jusqu'à température ambiante et (iii) de l'étape de séchage finale, la microstructure de la masse poreuse finale (morphologie des grains/aiguilles, arrangement des grains/aiguilles, distribution en taille des pores, Surface Spécifique BET (SBET), ...) et par conséquent les propriétés associées (capacité de stockage de l'acétone/actéylène, restitution du gaz, ...) peuvent s'en trouver grandement affectées.

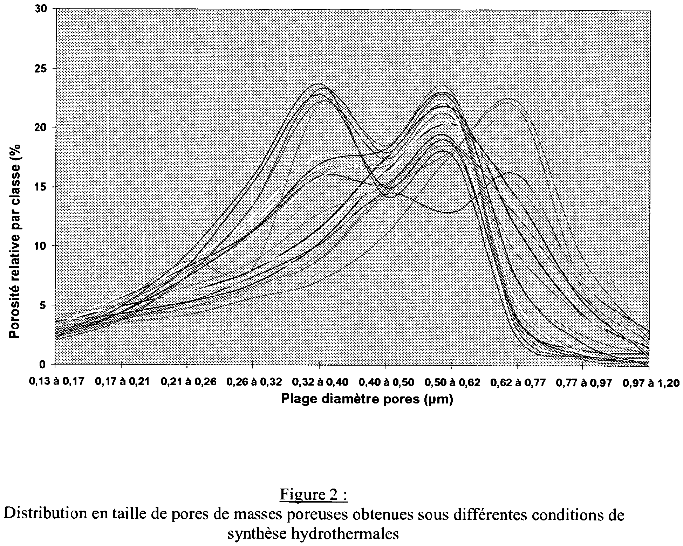

La Figure 2 montre la distribution en taille des pores déterminée par porosimétrie au mercure d'échantillons de masses micro-poreuses issues d'essais de production réalisés pour différents paramètres de synthèse hydrothermale (température de synthèse (180 à 210°C), temps de montée à cette température (1 à 30 heures), pression de synthèse (entre 10 et 30 bar), temps de synthèse (30 à 240 min), ). Dans le cadre de ces essais, la rampe de descente en température n'a pas été modifiée. Il s'agit d'une trempe brutale consistant à sortir les bouteilles garnies après leur cycle de synthèse, de les soumettre à une douche durant un temps fixé et de les laisser se refroidir librement jusqu'à température ambiante. Le choix des précurseurs et l'étape de séchage n'ont pas été modifiée dans le cadre de ces essais.

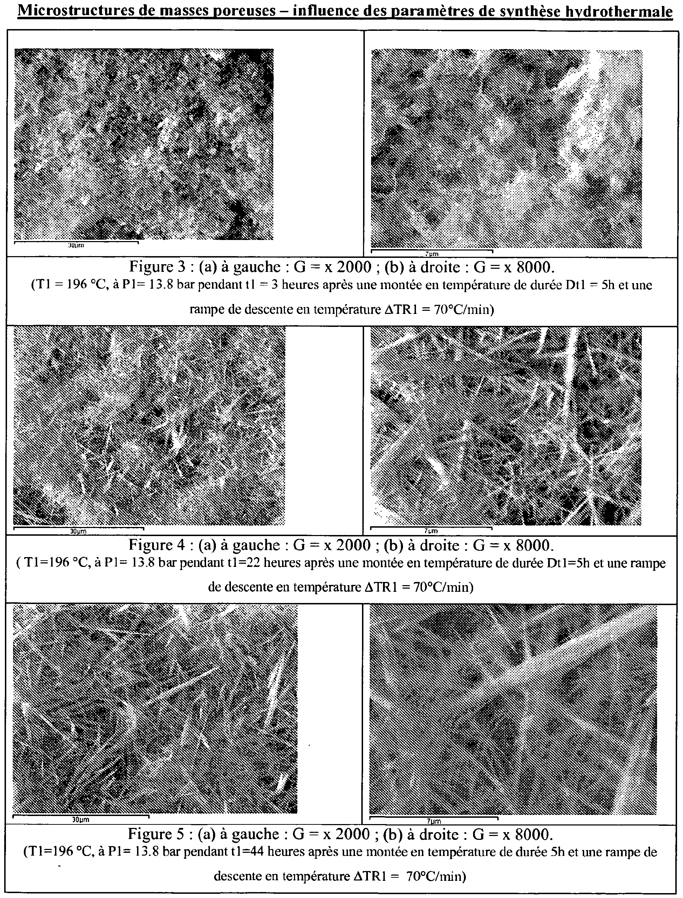

Le fait d'avoir modifié les paramètres opératoires de l'étape de synthèse hydrothermale induit pour les bouteilles des capacités de restitution du gaz fortement affectées. Ces fortes modifications sont directement liées à la microstructure de la masse poreuse résultante elle-même directement du procédé d'élaboration et en particulier, dans ce cas précis, de la synthèse hydrothermale. II est à noter que la conductivité thermique de la garniture silico-calcaire chargée en solvant n'est, quant à elle, que très peu sensible aux paramètres d'élaboration pour l'ensemble de bouteilles de gaz considéré pour des macro/microstructures quasi équivalentes. Il est à noter par ailleurs que l'ensemble des garnitures dont la caractérisation en répartition poreuse est présentée sur la Figure 3 ont été soumises et approuvées favorablement aux tests d'approbation en vigueur et définis par la norme ISO 3807-1 :2000. En particulier, l'ensemble de ces garnitures, de composition typique finale de type CaxSiyOz,w.H2O et dont les diamètres de pores les plus nombreux sont situés dans la plage 0.3 - 0.9µm, ont satisfait aux exigences du test de retour de flamme (test d'inflammation), garantissant ainsi la sécurité réglementaire de ces bouteilles. En outre, la répartition poreuse de ces garnitures est couramment monomodale, voire bimodale, c'est-à-dire centrée autour d'une (voire deux) taille(s) de pores majoritairement rencontrée au sein de la garniture.

Une corrélation a été observée entre la distribution poreuse et la morphologie des pores (dimensions géométriques). Les pores sont obtenus par empilements d'aiguilles micrométriques de longueur allant de 1 à 20µm, de largeur allant de 0,1 à 5 µm et d'épaisseur comprise entre 0,01 et 5 µm. Ces dimensions de taille d'aiguilles sont la conséquence directe du procédé d'élaboration et dans le cas présent de l'étape de synthèse hydrothermale.

Une étude détaillée a été réalisée sur l'impact de la durée de la synthèse hydrothermale (temps t1 du palier allant de 3 à 44hr, tout autre paramètre de l'étape de synthèse hydrothermale étant identique par ailleurs (rampe de montée, durée de la montée, pression de synthèse, vitesse de refroidissement)). De même, les étapes amont et aval, à savoir les conditions de traitement du calcaire, la formulation/préparation de la pâte et le séchage sont rigoureusement identiques.
La figure 3 représente un échantillon de structure de garnissage synthétisé à T1 = 196°C, à P1= 13.8 bar pendant t1 = 3 heures après une montée en température de durée Dt1 = 5h et une rampe de descente en température ΔTR 1 = 70°C/min.
La figure 4 représente un échantillon de structure de garnissage synthétisé à T1=196°C, à P1= 13.8 bar pendant t1=22 heures après une montée en température de durée Dt1=5h et une rampe de descente en température ΔR1 = 70°C/min.
La figure 5 représente un échantillon de structure de garnissage synthétisé à T1=196°C, à P1= 13.8 bar pendant tl=44 heures après une montée en température de durée 5h et une rampe de descente en température ΔTR 1 = 70°C/min.

Chacune de ces trois figures est prise par microscopie électronique à balayage.

Les photographies des Figures 4(a-b) présentent la microstructure de garnitures issues des bouteilles dont les performances d'extraction de gaz et de sécurité ont été jugées non conformes. Ces non-conformités sont à relier
- à une taille des aiguilles de xonotlite / tobermorite globalement plus courtes et moins épaisses, donc témoins d'une aptitude au passage du gaz moins favorable,
- à la présence de nodules constituant des hétérogénéités et entraînant une tenue mécanique trop faible pour une masse de garnissage et un rejet au test d'inflammation normatif.
- à une hétérogéniété des composés (présence de tobermorite, produit intermédiaire de synthèse et de xonolite, produit cristallisé final). Ceci est lié directement aux conditions de synthèse hydrothermale. La conséquence est une microstructure conduisant à des propriétés finales non-conformes (vitesse d'extraction des gaz, résistance mécanique, ...).

Les photographie des Figures 4 et 5 montrent au contraire une structure cristalline majoritairement de type xonotlitique, constituée de fines aiguilles enchevêtrées. Ce type de structure est conforme aux exigences des tests de résistance mécanique, de restitution de gaz et de sécurité. Elle correspond à une synthèse hydrothermale achevée et adaptée à la microstructure visée qui confère les propriétés requises aux garnitures.

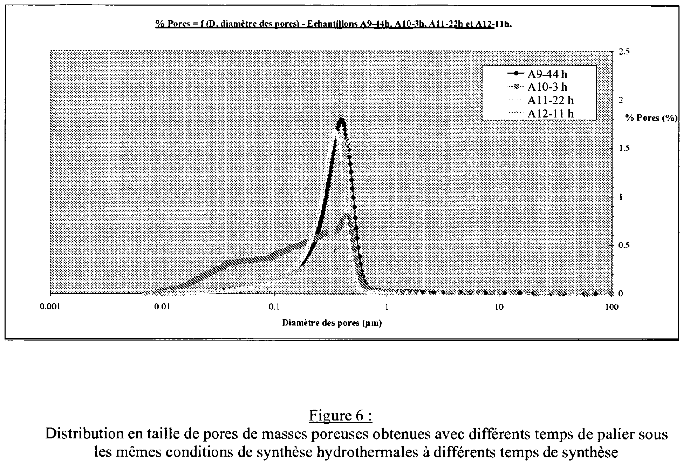

La Figure 6 montre la répartition en taille des pores et le Tableau 1 indique les caractéristiques des échantillons produits à différents temps de synthèse t1 : 3, 11, 22 et 44h.

**Tableau 1 : Caractéristiques des échantillons produits à différents temps de synthèse t1 : 3, 11, 22 et 44h.**

| | Phases cristallographiques déterminées par diffraction X (%) | | | | | | |
|---|---|---|---|---|---|---|---|
| Temps de synthèse TI (h) | CaCO3 | SiO2 | Tobermorite 11A | Tobermorite 9A | Xonotlite | % porosité | D50 (µm) |
| 3 | ~50 | ~50 | | | | 86.7 | 0.21 |
| 11 | | | ~10 | ~40 | <50 | 87.6 | 0.61 |
| 22 | | | 1-2 | | >98 | 91.5 | 0.35 |
| 44 | | | 3-5 | | >93 | 91.8 | 0.40 |

Les propriétés améliorées de sécurité et de soutirage de gaz (maintien du débit et de la pression interne de la bouteille, quantité de gaz utilisable) sont directement dépendantes des paramètres du procédé de fabrication et dans ce cas particulier des conditions de synthèse hydrothermale (temps de montée en température, température, pression, temps de synthèse et temps de descente en température) précédemment décrits, qui définissent l'état microstructural cristallisé des garnitures.

Le type de structure de garnissage recherché (Figures 5 et 6) selon l'invention est tout d'abord la conséquence de la préparation d'une chaux vive ayant une réactivité satisfaisante et apte à former, après synthèse hydrothermale, le matériau aciculaire recherché (brevets S7092 et S7224). L'étape suivante du procédé consiste à mélanger la chaux vive à de la silice, qui peut être amorphe ou cristalline, selon un rapport molaire CaO:SiO₂ de 0,8 à 1. En outre, le ratio eau/précurseurs solides (chaux + silice) est de préférence compris entre 2 et 60, plus préférentiellement entre 3 et 25.

Le mélange est ensuite introduit dans les récipients à garnir et soumis à une synthèse hydrothermale. Pour être aboutie, la synthèse hydrothermale doit être effectuée :
- à une température de synthèse hydrothermale T1 pouvant être comprise entre 150 et 300°C, préférentiellement entre 180 et 250°C (voir Figure 2 pour la description des différents paramètres impactant sur l'étape de synthèse hydrothermale),
- à une pression P1 comprise entre 5.10⁵ Pa et 25.10⁵ Pa (5 et 25 bars), préférentiellement entre 7.10⁵ Pa et 15.10⁵ Pa (7 et 15 bars). Selon une première forme d'exécution, la synthèse peut être réalisée en introduisant le mélange dans le récipient ouvert qu'elle est destinée à garnir, puis en plaçant celui-ci dans un four autoclave soumis à la pression décrite précédemment. Selon une deuxième forme d'exécution, la synthèse hydrothermale peut être réalisée en plaçant le mélange dans le récipient qu'elle est destinée à garnir, en fermant celui-ci avec un bouchon équipé d'un système de régulation de pression (tel qu'une valve), en pressurisant le récipient à une pression allant de la pression atmosphérique aux pressions précédemment décrites, puis en plaçant ce récipient dans un four non pressurisé.
- pendant une durée t1 allant, selon le volume du récipient à garnir, de 10h à 70h, par exemple voisine de 40 heures pour un récipient de volume en eau compris entre 3 et 50litres, préférentiellement égal à 6 litres.
- La montée en température Δt₁ à T1 doit se faire sur une durée inférieure à 10h, de préférence inférieure à 2h. Lorsque plusieurs récipients garnis de matière de garnissage sont enfournés au sein d'un même four, ce paramètre tient compte du positionnement des bouteilles les unes par rapport aux autres. En effet, le chauffage des bouteilles est assuré par une circulation d'air chauffé à l'intérieur du four de synthèse. Cette circulation d'air va dépendre fortement du nombre et de la position des bouteilles enfournées. Il est nécessaire de limiter les variations sur le temps de montée en température, puisque ce paramètre impacte directement également sur la vitesse de cristallisation des aiguilles des composés de type CaₓSi_{y}O_{z},w.H₂O formés.
- La redescente à la température ambiante depuis T1 est comprise entre 1 et 48h, de préférence entre 1 et 25h, selon la vitesse de redescente en température ΔTR₁. Une étape supplémentaire facultative à ce stade du procédé peut consister à refroidir brutalement les bouteilles par une douche dès la fin du cycle de synthèse (T1, t1, P1) ou par trempe dans de l'eau ou un liquide caloporteur approprié.

L'étape de séchage a pour fonction non seulement d'évacuer l'eau résiduelle, mais aussi de conférer à la masse traitée une structure majoritairement cristalline et ainsi de parfaire l'étape de synthèse hydrothermale. En effet, si après synthèse hydrothermale la phase majoritaire n'est pas la xonotlite recherchée, mais qu'une quantité significative de tobermorite subsiste et/ou des résidus de phases précurseurs (CaO, SiO2), l'étape de séchage peut continuer la cristallisation de xonotlite. Cette opération de séchage est réalisée dans un four traditionnel électrique (qui peut être le même que celui utilisé pour l'opération de synthèse hydrothermale), à la pression atmosphérique, c'est-à-dire après que les bouchons et valves aient été retirés du sommet des récipients après synthèse hydrothermale dans le second exemple de synthèse hydrothermale décrit auparavant.

L'invention a également pour objet un récipient renfermant une structure de garnissage telle que décrite précédemment, lequel récipient est apte à contenir et distribuer un fluide.

Le récipient comprend habituellement une enveloppe métallique renfermant la structure de garnissage décrite précédemment. L'enveloppe métallique peut être constituée d'un matériau métallique tel que l'acier, par exemple un acier à carbone normalisé P265NB selon la norme NF EN10120, dont l'épaisseur le rend apte à résister au moins à la pression de synthèse hydrothermale sans risque d'accident et apte à résister à une pression d'épreuve de 60 bar (6 MPa), valeur normative réglementaire pour le conditionnement de l'acétylène dans les conditions décrites précédemment. Le récipient est en outre habituellement de forme cylindrique et généralement pourvu de moyens de fermeture et d'un régulateur de pression. Ce récipient a de préférence un rapport diamètre / longueur compris entre 0,2 et 0,7, plus préférentiellement entre 0,35 et 0,5, et une capacité en eau minimale d'un litre. Habituellement, un tel récipient aura la forme d'une bouteille.

Les fluides stockés dans la structure de garnissage selon l'invention peuvent être des gaz ou des liquides.

Comme gaz, on peut citer les gaz comprimés purs ou en mélanges sous forme gazeuse ou liquide, tels que l'hydrogène, les hydrocarbures gazeux (alcanes, alcynes, alcènes), l'azote et l'acétylène, et les gaz dissous dans un solvant tels que l'acétylène et les mélanges acétylène-éthylène ou acétylène-éthylène-propylène, dissous dans un solvant tel que l'acétone ou le diméthylformamide (DMF).

Comme liquides, on peut notamment citer les précurseurs organométalliques tels que les précurseurs de Ga et In, utilisés en particulier dans l'électronique, ainsi que la nitroglycérine.

En particulier, le récipient selon l'invention contient de l'acétylène dissous dans du DMF ou de l'acétone.

La présente invention permet de surmonter les inconvénients de l'art antérieur en utilisant une structure poreuse spécifique de garnissage de récipients formée par un enchevêtrement de cristallites ayant une morphologie et une taille particulières.

Le procédé de fabrication de structure de garnissage selon l'invention permet l'obtention de ces cristallites. La maîtrise des paramètres opératoires de toutes les étapes de fabrication (traitement du calcaire/formulation/préparation de la pâte, synthèse hydrothermale, séchage) est impérative. Le brevet FR 2 904 240 concerne les aspects de calcination du calcaire / formulation / préparation de la pâte. A partir de l'instant où la pâte CaO-SiO2-H2O est conforme, l'étape de synthèse hydrothermale, objet de ce brevet, permet l'obtention d'une microstructure parfaitement maîtrisée et adaptable en fonction des propriétés recherchées (capacité de stockage du gaz, taux de restitution, propriétés mécaniques, conformité aux tests d'inflammabilité, reproductibilité/fiabilité des masses produites sur l'outil dé production, ...),

## Revendications

1. Procédé de fabrication d'une structure de garnissage de récipient comprenant une phase cristalline renfermant de 55 à 97 % en poids de cristallites de xonotlite et de 3 à 45% en poids de cristallites de tobermorite, moins de 15% en poids d'intermédiaires de formule :
CaₓSi_{y}O_{z}, w H₂O avec 1 < x < 16, 1 < y < 24, 4< z < 60 et 1 < w < 18,
dont moins de 5% en poids de CaCO₃, et moins de 5% en poids de SiO₂, ladite structure de garnissage étant homogène, **caractérisé en ce qu'**il comprend les étapes suivantes :
a) une étape de montée en température, sur une durée inférieure à 10h, d'un mélange initial de chaux vive et de silice à une température T1 comprise entre 150 et 300°C,
b) une étape de synthèse hydrothermale effectuée :
- à partir du mélange de chaux vive et de silice issu de l'étape a),
- à une température T1 comprise entre 150 et 300°C,
- à une pression P1 comprise entre 5.10⁵Pa et 25.10⁵ Pa, et
- pendant une durée t1 comprise entre 10h et 70h ;
c) une étape de refroidissement, sur une durée comprise entre 1 et 48 h, du mélange issu de l'étape b) de la température T1 à la température ambiante à une vitesse de refroidissement ΔTR1 comprise entre 3 et 200°C / heure.
d) une étape de séchage du mélange issu de l'étape c).

2. Procédé selon la revendication 1, **caractérisé en ce que** :
- à l'étape a) la montée en température s'effectue sur une durée Δt1 inférieure à 2h,
- à l'étape b) la température T1 est comprise entre 180 et 250°C, et
- à l'étape c) la pression P1 est comprise entre 7. 10⁵ Pa et 25.10⁵ Pa.

3. Procédé selon l'une des revendications 1 ou 2, **caractérisé en ce que** la durée de refroidissement est inférieure à 25h.

4. Procédé selon l'une des revendications 1 à 3, **caractérisé en ce que** le mélange initial représente un volume en eau égal à 6 litres et **en ce que** l'étape de synthèse hydrothermale est effectuée pendant une durée comprise entre 35 et 45 h.

5. Procédé selon l'une des revendications 1 à 4, **caractérisé en ce que** la chaux vive est obtenue par calcination à une température d'au moins 850°C pendant au moins une heure de pavés de calcaire tels qu'au moins 90% en poids ont des dimensions de 1 à 15 mm, ledit calcaire ayant une pureté d'au moins 92% en poids et une porosité ouverte allant de 0 à 25%.

6. Procédé selon l'une des revendications 1 à 5, **caractérisé en ce que** l'étape de séchage est réalisée à une température de 300 à 450°C pendant une durée de 40 à 200 heures.

## Claims

1. Process for producing a container packing structure comprising a crystalline phase containing 55 to 97 % by weight of xonotlite crystallites, 3 to 45 % by weight of tobermorite crystallites, and less than 15 % by weight of intermediates of formula:
CaₓSiyO_{z}, w H₂O with 1<x<16, 1 <y<24, 4<z<60 and 1<w<18,
which contains less than 5 % by weight of CaCO₃ and less than 5 % by weight of SiO₂, said packing structure being homogeneous, **characterised in that** it comprises the following steps:
a) a temperature-raising step, over a time of less than 10 hours, during which an initial mixture of quicklime and silica is heated to a temperature T1 of between 150 and 300 °C;
b) a hydrothermal synthesis step carried out:
- using the quicklime and silica mixture obtained from step a),
- at a temperature T1 of between 150 and 300°C,
- at a pressure P1 of between 5·10⁵ Pa and 25·10⁵ Pa, and
- for a time t1 of between 10 hours and 70 hours;
c) a cooling step, over a time of between 1 and 48 hours, in which the mixture obtained from step b) is cooled from the temperature T1 to room temperature at a cooling rate ΔTR1 of between 3 and 200°C/hour; and
d) a drying step, in which the mixture obtained from step c) is dried.

2. Process according to claim 1, **characterised in that**
- in step a), the temperature is raised over a time Δt1 of less than 2 hours;
- in step b), the temperature T1 is between 180 and 250°C, and
- in step c), the pressure P1 is between 7·10⁵ Pa and 25·10⁵ Pa.

3. Process according to either claim 1 or claim 2, **characterised in that** the cooling time is less than 25 hours.

4. Process according to any one of claims 1 to 3, **characterised in that** the initial mixture represents a water volume equal to 6 litres, and **in that** the hydrothermal synthesis step is carried out for a time of between 35 and 45 hours.

5. Process according to any one of claims 1 to 4, **characterised in that** the quicklime is obtained by calcination, at a temperature of at least 850 °C for at least one hour, of limestone blocks which are such that at least 90 % by weight have a size of 1 to 15 mm, said limestone having a purity of at least 92 % by weight and an open porosity ranging from 0 to 25 %.

6. Process according to any one of claims 1 to 5, **characterised in that** the drying step is carried out at a temperature of 300 to 450 °C for a time of 40 to 200 hours.

## Patentansprüche

1. Verfahren zur Herstellung einer Behälterfüllstruktur, umfassend eine kristalline Phase, die 55 bis 97 Gewichts-% Xonotlit-Kristallite und 3 bis 45 Gewichts-% Tobermorit-Kristallite und weniger als 15 Gewichts-% Zwischenprodukte der folgenden Formel enthält:
CaₓSiyO_{z}, w H₂O mit 1<x<16,1<y <24,4< z < 60 und 1<w< 18,
davon weniger als 5 Gewichts-% CaCO₃ und weniger als 5 Gewichts-% SiO₂, wobei die Füllstruktur homogen ist, **dadurch gekennzeichnet, dass** es die folgenden Schritte umfasst:
a) einen Schritt zur Erhöhung der Temperatur, über eine Dauer von unter 10 h, eines Ausgangsgemischs aus Calciumoxid und Siliziumdioxid, auf eine Temperatur T1 zwischen 150 und 300 °C,
b) einen Schritt zur hydrothermalen Synthese, der durchgeführt wird:
- unter Verwendung des Gemischs aus Calciumoxid und Siliziumdioxid aus Schritt a),
- bei einer Temperatur T1 zwischen 150 und 300 °C,
- bei einem Druck P1 zwischen 5x10⁵ Pa und 25x10⁵ Pa, und
- während einer Dauer t1 zwischen 10 h und 70 h;
c) einen Schritt zur Abkühlung, über eine Dauer zwischen 1 und 48 h, des Gemischs aus Schritt b) von der Temperatur T1 auf die Umgebungstemperatur bei einer Abkühlgeschwindigkeit ΔTR1 zwischen 3 und 200°C / Stunde,
d) einen Schritt zum Trocknen des Gemischs aus Schritt c).

2. Verfahren nach Anspruch 1, **dadurch gekennzeichnet, dass**:
- die Temperaturerhöhung in Schritt a) über eine Dauer Δt1 von unter 2 h erfolgt,
- die Temperatur T1 in Schritt b) zwischen 180 und 250 °C liegt, und
- der Druck P1 in Schritt c) zwischen 7x10⁵ Pa und 25x10⁵ Pa liegt.

3. Verfahren nach einem der Ansprüche 1 oder 2, **dadurch gekennzeichnet, dass** die Abkühldauer unter 25 h beträgt.

4. Verfahren nach einem der Ansprüche 1 bis 3, **dadurch gekennzeichnet, dass** das Ausgangsgemisch ein Wasservolumen gleich 6 Liter darstellt und, dass der Schritt zur hydrothermalen Synthese während einer Dauer zwischen 35 und 45 h erfolgt.

5. Verfahren nach einem der Ansprüche 1 bis 4, **dadurch gekennzeichnet, dass** Calciumoxid durch Brennen von Kalksteinblöcken, die derart sind, dass mindestens 90 Gewichts-% Abmessungen von 1 bis 15 mm aufweise, bei einer Temperatur von mindestens 850°C während mindestens einer Stunde erhalten wird, wobei der Kalkstein eine Reinheit von mindestens 92 Gewichts-% und eine offene Porosität von 0 bis 25% aufweiset.

6. Verfahren nach einem der Ansprüche 1 bis 5, **dadurch gekennzeichnet, dass** der Trocknungsschritt bei einer Temperatur von 300 bis 450°C während einer Dauer von 40 bis 200 Stunden erfolgt.
